# EUROPÄISCHE PATENTSCHRIFT

(11) **EP 4 484 145 B1**
(45) Veröffentlichungstag und Bekanntmachung des Hinweises auf die Patenterteilung: **14.10.2026**
(21) Anmeldenummer: 23182432.7
(22) Anmeldetag: 29.06.2023
(51) Int. Cl.: B29D 23/00, F16L 9/19, G02B 6/44, B29C 48/00, B29C 48/025, B29C 48/156, B29C 48/92, G02B 6/04, B29C 48/09, B29C 48/11, B29C 48/28

(54) **VERFAHREN ZUR HERSTELLUNG EINES ROHRVERBUNDES AUS MIKROKABELROHREN ZUR AUFNAHME UND FÜHRUNG VON TELEKOMMUNIKATIONSLEITUNGEN**
METHOD FOR PRODUCING A PIPE ASSEMBLY OF MICROCABLE PIPES FOR RECEIVING AND GUIDING TELECOMMUNICATION LINES
PROCÉDÉ DE FABRICATION D'UN ASSEMBLAGE DE TUBES À PARTIR DE MICROCÂBLES POUR RECEVOIR ET GUIDER DES LIGNES DE TÉLÉCOMMUNICATION

(43) Veröffentlichungstag der Anmeldung: 01.01.2025
(73) Patentinhaber: Dipl.-Ing. Dr. Ernst Vogelsang GmbH & Co. KG, D-45699 Herten (DE)
(72) Erfinder: VOGELSANG, Horst, 45699 Herten (DE)
(74) Vertreter: Andrejewski - Honke Patent- und Rechtsanwälte Partnerschaft mbB

(56) Entgegenhaltungen:
- EP-A1- 3 958 415
- CN-U- 209 624 853
- US-A1- 2017 153 405

## Beschreibung

Die Erfindung betrifft ein Verfahren zur Herstellung eines Rohrverbundes aus Kabelrohren, insbesondere Mikrokabelrohren zur Aufnahme und Führung von Telekommunikationsleitungen, wonach die einzelnen Kabelrohre bereitgestellt und mit wenigstens einer schlauchförmigen Umhüllung zu einem Mehrfachrohrbündel zusammengefasst werden.

Mikrokabelrohre bezeichnen generell Kabelrohre mit verringertem Durchmesser, die im allgemeinen Werte für den Außendurchmesser von bis zu 40 mm im Maximum annehmen. Solche Mikrokabelrohre werden unter anderem von der Firma Rehau hergestellt und unter der Kennzeichnung "Rauspeed Mikrokabelrohrsystem" sowie unter der Kennzeichnung "Fiberspeed" von der Anmelderin vermarktet. Die Erfindung ist jedoch ausdrücklich nicht auf die Herstellung eines Rohrverbundes aus Mikrokabelrohren beschränkt, sondern es geht ganz generell um solche Rohrverbunde.

Der Rohrverbund aus den Kabelrohren bzw. das eine oder die mehreren Mehrfachrohrbündel werden in der Praxis im Erdreich vergraben und für die Realisierung von insbesondere Glasfaser-Netzarchitekturen eingesetzt. Tatsächlich dienen die Mikrokabelrohre in der Regel zur Aufnahme und Führung von Telekommunikationsleitungen, bei denen es sich meistens um Lichtwellenleiter, Lichtleiterkabel, Telefonkabel etc. handelt.

Dazu wird der Rohrverbund aus den Kabelrohren bzw. werden das eine oder die mehreren Mehrfachrohrbündel bis zu einem Kabelverzweiger oder auch bis in ein Gebäude oder vor ein Gebäude verlegt. Durch die Bündelung der Mikrokabelrohre und ihre Zusammenfassung mithilfe der Umhüllung wird die Verlegung und insbesondere Erdverlegung inklusive späterer Verzweigung vereinfacht.

Um das Mehrfachrohrbündel zur Verlegestelle zu transportieren, werden die Mehrfachrohrbündel in der Regel im Zuge der Herstellung auf Trommeln aufgewickelt. Hierbei kann es sich beispielhaft um Holztrommeln mit einer Wickellänge von über 1000 m handeln. An der Baustelle bzw. Verlegestelle wird nun das Mehrfachrohrbündel von der Holztrommel im Beispielfall abgewickelt.

Dadurch können sich Spannungen im Mehrfachrohrbündel dergestalt ergeben, dass hier ein sogenannter "Korkenziehereffekt" beobachtet wird. Dieser Effekt lässt sich im Endeffekt darauf zurückführen, dass die einzelnen Kabelrohre und insbesondere Mikrokabelrohre in der Praxis und beispielsweise im Vakuum mit der schlauchförmigen Umhüllung ausgerüstet und hierin eingeschlossen werden. Als Folge hiervon liegt ein besonders fester Verbund vor. Sobald das betreffende Mehrfachrohrbündel auf der Holztrommel im Beispielfall aufgewickelt wird, ergeben sich durch die zwangsläufig zu beobachtenden unterschiedlichen Wickelradien Spannungen im Innern, die sich beim Abwickeln durch eine Verschiebung der Kabelrohre im Innern der schlauchförmigen Umhüllung auflösen können, manchmal aber auch dauerhaft verbleiben und zu dem "Korkenziehereffekt" führen.

Die beschriebene Verschiebung ist also oftmals mit einem spiralförmigen oder wendelförmigen Ausweichen der einzelnen Kabelrohre im Innern des Mehrfachrohrbündels verbunden, so dass der Korkenziehereffekt beim Abwickeln beobachtet wird. Ein solcher spiral- oder wendelförmiger Verlauf ist am Verarbeitungsort bzw. einer Baustelle insofern nachteilig und sollte vermieden werden, weil hierdurch die Verlegung des Mehrfachrohrbündels erschwert wird und das Auffinden einzelner Mikrokabelrohre und beispielsweise das Abzweigen in ein Gebäude oder einen Kabelverzweiger problematisch ist.

Aus diesem Grund wird beim gattungsbildenden Stand der Technik nach der auf die Anmelderin zurückgehenden EP 3 958 415 A1 so vorgegangen, dass die Umhüllung mithilfe eines Ummantelungsextruders auf bzw. um das Bündel an den Mikrokabelrohren derart extrudiert wird, dass die schlauchförmige Umhüllung zur Herstellung des Mehrfachrohrbündels saugend an die Mikrokabelrohre angelegt wird. Dieses saugende Anlegen der schlauchförmigen Umhüllung zur Herstellung des Mehrfachrohrbündels an die einzelnen Kabelrohre bzw. Mikrokabelrohre führt in Verbindung mit einer innenseitigen Profilierung der Umhüllung dazu, dass das Mehrfachrohrbündel zwar grundsätzlich eine dichte Packung für die einzelnen Mikrokabelrohre zur Verfügung stellt, gleichwohl eine gewisse Relativbewegung zwischen den im Innern der schlauchförmigen Umhüllung zusammengefassten Kabelrohren und insbesondere Mikrokabelrohren zulässt. Dadurch ist die Reibung zwischen dem betreffenden Kabelrohr und der Umhüllung reduziert und wird beim Abwickeln des erfindungsgemäßen Mehrfachrohrbündels von der Trommel kein Korkenziehereffekt beobachtet, was die Verarbeitung vor Ort und am Verlegeort deutlich vereinfacht. Das hat sich grundsätzlich bewährt.

Im Stand der Technik werden allerdings auch Rohrverbunde aus Kabelrohren und insbesondere Mikrokabelrohren zur Aufnahme und Führung von Telekommunikationsleitungen beschrieben und umgesetzt, die nicht mit einer speziellen innenseitigen Profilierung der Umhüllung ausgerüstet sind. Ein Beispiel hierfür kann man anhand der US 2003/0012527 A1 nachvollziehen. Ähnlich geht die US 2005/0224124 A1 vor.

Im Rahmen der NL 2 001 728 C2 werden vergleichbare Ansätze dahingehend beschrieben, einen Rohrverbund aus Mikrokabelrohren zur Aufnahme und Führung von beispielsweise Lichtwellenleitern, Telefonkabeln und vergleichbaren Kabeln mit einer Umhüllung auszurüsten und hierdurch die einzelnen Mikrokabelrohre zusammenzufassen. Dabei sind die Mikrokabelrohre bei der vorerwähnten Lehre von vornherein im Vergleich zu einer longitudinalen Achse wendelförmig angeordnet. Dadurch soll dem zuvor bereits beschriebenen Korkenziehereffekt entgegengewirkt werden. Allerdings ist eine solche wendelförmige Anordnung der Kabelrohre im Innern der Umhüllung bei der Herstellung problematisch und aufwendig.

Bisher gibt es im Stand der Technik allerdings keine Ansätze dahingehend, die schlauchförmige Umhüllung außenseitig und innenseitig so weiter zu entwickeln, dass dem Korkenziehereffekt - auch ohne die spezielle Profilierung im Innern, wie sie in der gattungsbildenden EP 3 958 415 A1 propagiert wird - entgegengewirkt werden kann. Zwar arbeitet der weitergehende und nicht auf ein Mehrfachrohrbündel gerichtete Stand der Technik beispielsweise mit Gleitmitteln entsprechend der DE 41 33 415 A1. Diese kommen jedoch in Rillen an der Kanalinnenwand des betreffenden Kabelführungsrohres aus thermoplastischem Kunststoff zum Einsatz.

Vergleichbare Rillenausbildungen an der Innenwand werden auch durch die EP 0 870 963 B1 propagiert.

Einen anderen Ansatz verfolgt die DE 295 14 123 U1. Hier geht es um ein Rippenrohr aus Kunststoff und insbesondere ein Kabelschutzrohr, welches mit nach außen vorspringenden Rippen ausgerüstet ist. Die Rippen können an ihrer Innenwand mit einer dünnen koextrudierten Schicht aus einem mit reibungsmindernden Additiven versetzten Kunststoff gebildet sein.

Schließlich ist durch die DD 117 838 eine Vorrichtung zur Erzeugung von Rippenrohren aus Kunststoff oder einem anderen stranggepressten Material zum Einsatz als Kabelkanal bekannt geworden. Die betreffende Vorrichtung kann dabei über ein muffenartiges Werkzeug mit Gleitmittelzuführleitungen für ein Gleitmittel und beispielsweise Öl ausgerüstet werden. Dadurch wird insgesamt die Entnahme des Rohres aus der Vorrichtung erleichtert.

In der CN209624853U werden solche Rippen an der Außenwand zudem mit Graphitpulver versehen um diese als Festkörper-Schmierung innerhalb des Rohrverbundes zu verwenden.

Ein Verfahren zur Herstellung eines Rohrverbundes aus Mikrokabelrohren mit einer Umhüllung, wobei diese an ihrer den Kabelrohren zugewandten Innenseite mit einer Profilierung ausgerüstet ist, ist z.B aus der EP3958415 A1 bekannt um ein Verringern des Korkenziehereffekts zu erreichen.

Der vorliegenden Erfindung liegt das technische Problem zugrunde, ein derartiges Verfahren so weiterzuentwickeln, dass dem Korkenziehereffekt unabhängig von der innenseitigen Auslegung der Umhüllung entgegengewirkt werden kann.

Zur Lösung dieser technischen Problemstellung ist ein gattungsgemäßes Verfahren zur Herstellung eines Rohrverbundes aus Kabelrohren und insbesondere Mikrokabelrohren zur Aufnahme und Führung von Telekommunikationsleitungen im Rahmen der Erfindung dadurch gekennzeichnet, dass die pulverförmige Gleitmittelschicht (S) mithilfe einer Pulverausgabevorrichtung (13) über zumindest einen Pulverzufuhrkanal (19) auf die Kabelrohre aufgesprüht wird, wobei der Pulverzufuhrkanal (19) in eine die Kabelrohre umschließende Muffe (20) mündet.

Die Erfindung geht also zunächst einmal und entgegen den Vorgaben beispielsweise in der DD 117 838 so vor, dass anstelle des dort als Gleitmittel eingesetzten Öles nicht eine Flüssigkeit außenseitig auf die Umhüllung aufgebracht wird, sondern vielmehr die pulverförmige Gleitmittelschicht aus dem Pulver auf die einzelnen Kabelrohre. Bei diesem Vorgang werden im Regelfall sämtliche Kabelrohre mit der betreffenden Gleitmittelschicht aus dem Pulver ausgerüstet. Es können aber auch nur einzelne Kabelrohre mit der Gleitmittelschicht ausgerüstet werden. Bspw. nur die an der Umhüllung innenseitig anliegenden Kabelrohre. Meistens werden jedoch sämtliche Kabelrohre mit der Gleitmittelschicht versehen.

Hierbei geht die Erfindung von der Erkenntnis aus, dass ein solches Pulver, also allgemein ein staubfein zerkleinerter zerriebener Stoff aus feinen, festen und trockenen Stoffteilchen mit einer Teilchengröße von deutlich unter 1 mm, durch sein einer Flüssigkeit ähnliches Fließverhalten vergleichbar wie eine Gleitmittelflüssigkeit verarbeitet werden kann. Im Gegensatz zu einem flüssigen Gleitmittel ist die erfindungsgemäß außenseitig auf die Kabelrohre aufgebrachte pulverförmige Gleitmittelschicht mit dem Vorteil ausgerüstet, dass die Verlegearbeiten des Mehrfachrohrbündels beispielsweise in der Erde hierdurch nicht behindert werden.

Tatsächlich kommt an dieser Stelle als Pulver typischerweise ein solches zum Einsatz, welches hydrophob bzw. wasserabweisend sowie regelmäßig elektrisch isolierend ausgebildet ist. Außerdem sind solche Pulver - im Gegensatz zu Ölen als Gleitmittel - umweltverträglich. Durch ihren wasserabweisenden Charakter werden bei den Erdverlegearbeiten Schmutzanhaftungen des oftmals feuchten Erdreichs von vornherein und prinzipbedingt verhindert.

Außerdem sorgt der umweltverträgliche Charakter der pulverförmigen Gleitmittelschicht dafür, dass etwaige und bei ölhaltigen Gleitmitteln denkbare Kontaminationen des Erdreiches von vornherein und prinzipbedingt vermieden werden. Hierzu trägt ergänzend der Umstand bei, dass das fragliche Pulver darüber hinaus und vorteilhaft als steriles und hautverträgliches Mineralpulver ausgebildet ist.

Durch die mineralische Herkunft des in der Regel sterilen und hautverträglichen Mineralpulvers werden per se etwaige Verschmutzungen des Erdreiches vermieden, weil das Pulver aus einem Mineral hergestellt wird, welches selbst dem Erdreich entstammt. Durch die zusätzliche Hautverträglichkeit des Mineralpulvers ist zudem eine unbedenkliche Verarbeitung vor Ort seitens des Verlegepersonals sichergestellt und werden etwaige Gesundheitsgefährdungen des Verlegepersonals von vornherein ausgeschlossen.

Ganz besonders bevorzugt handelt es sich bei dem Pulver um ein Schichtsilikat und insbesondere Magnesiumsilikathydrat. Außerdem verfügt das Pulver typischerweise über eine Korngröße im Bereich von weniger als 100 µm und insbesondere sogar über eine Korngröße von 75 µm und weniger.

Tatsächlich hat sich an dieser Stelle der Rückgriff auf Talk bzw. Talkum als besonders günstig erwiesen, um die Kabelachse bzw. sämtlichen Kabelrohre außenseitig mit der pulverförmigen Gleitmittelschicht auszurüsten. Neben Talkum sind natürlich auch andere Mineralpulver mit den geschilderten vorteilhaften Eigenschaften denkbar und können beispielsweise als Mischung zur Realisierung der pulverförmigen Gleitmittelschicht eingesetzt werden.

Talkum ist in diesem Zusammenhang besonders bevorzugt, weil es in großen Mengen gefördert und aufbereitet wird sowie industriell vielfach zum Einsatz kommt. Zu nennen ist hier nicht nur die Verwendung als Füllstoff in der industriellen Erzeugung von Papier und Zellstoff oder bei Farben und Lacken, sondern auch als Trennmittel in elektrischen Kabeln. Hierfür sorgt der elektrisch isolierende Charakter des Pulvers, welcher auch für die vorliegenden Anwendungen von besonderer Bedeutung ist, weil in den einzelnen Kabelrohren bzw. Mikrokabelrohren bekanntermaßen Telekommunikationsleitungen geführt werden.

Die zusätzliche Verwendung von Talkumpulver beispielsweise in der Kosmetik und Medizinprodukteherstellung stellt darüber hinaus sicher, dass die Hautverträglichkeit gewährleistet ist und etwaige Gesundheitsgefährdungen der Einsatzkräfte bei den Erdverlegearbeiten von vornherein ausgeschlossen werden können. Schließlich bedingt der vielfache industrielle Einsatz von Talkum bzw. solcher Mineralpulver einen günstigen Preis, so dass sich die außenseitig auf die Kabelrohre aufgebrachte pulverförmige Gleitmittelschicht hierdurch besonders kostengünstig realisieren und umsetzen lässt. Hierin sind die wesentlichen Vorteile zu sehen.

Nach erfindungsgemäßer Ausgestaltung wird die pulverförmige Gleitmittelschicht mittels einer Pulverausgabevorrichtung über zumindest einen Pulverzufuhrkanal auf die Kabelrohre aufgesprüht. Dabei erfolgt die Beschichtung mit dem Pulver bzw. der pulverförmigen Gleitmittelschicht sämtlicher Kabelrohre. Grundsätzlich können auch nur einzelne Kabelrohre mit der pulverförmigen Gleitmittelschicht ausgerüstet werden. Im Regelfall werden jedoch sämtliche Kabelrohre auf diese Weise außenseitig behandelt, um beim Auf- und Abrollen und den Erdverlegearbeiten ein besonders einfaches Gleiten der einzelnen Kabelrohre gegeneinander und gegenüber der Umhüllung zu gewährleiten. Denn auch im Bereich zwischen dem jeweiligen Kabelrohr und der Umhüllung ist die pulverförmige Gleitmittelschicht vorgesehen und sorgt hier für eine Reibungsverminderung. Das gleiche wird beobachtet zwischen den einzelnen Kabelrohren.

Der Pulverzufuhrkanal mündet erfindungsgemäß in eine die Kabelrohre umschließende Muffe. Mithilfe der Muffe wird sichergestellt, dass das Pulver lediglich auf die Kabelrohre außenseitig aufgebracht wird, und zwar vorzugsweise auf sämtliche Kabelrohre. Dazu umschließt die Muffe die Kabelrohre größtenteils (luft)dicht. Außerdem ist die Muffe vorteilhaft zusätzlich an eine Saugeinheit angeschlossen, weil die pulverförmige Gleitmittelschicht in der Regel durch einen Zuluftstrom aufgetragen wird.

D.h., das zuvor beschriebene Pulver wird mithilfe des Zuluftstromes in einen fließ- und sprühfähigen Zustand überführt. In diesem Zustand trifft das Pulver auf die Kabelrohre und erzeugt hier die pulverförmige Gleitmittelschicht. Dabei reichen oftmals Schichtstärken von deutlich unter 1 mm und oftmals sogar von 100 µm und weniger aus, und zwar außenseitig auf dem jeweiligen Kabelrohr und insbesondere Mikrokabelrohr.

Neben den Kabelrohren kann zusätzlich auch die Umhüllung außenseitig mit einer pulverförmigen Gleitmittelschicht aus dem aufgebrachten Pulver ausgerüstet werden. Zu diesem Zweck kann erfindungsgemäß so vorgegangen werden, dass die Umhüllung zusätzlich mit vorzugsweise längserstreckten Riefen als außenseitige Profilierung der Umhüllung ausgerüstet wird. Diese Riefen sorgen ergänzend zur pulverförmigen Gleitmittelschicht für eine Verringerung der Reibung, insbesondere zwischen einzelnen Mehrfachrohrbündeln. Hierbei geht die Erfindung von der Erkenntnis aus, dass die Mehrfachrohrbündel nach ihrer Herstellung typischerweise auf einer Kabeltrommel aufgewickelt werden. Um den sich hierbei und einleitend bereits beschriebenen praktisch zwangsläufigen "Korkenziehereffekt" zu verringern oder sogar gänzlich zu vermeiden, wird infolge der pulverförmigen Gleitmittelschicht außenseitig auf jedem einzelnen der in der Umhüllung aufgenommenen Kabelrohre eine Relativbewegung der Kabelrohre untereinander und gegenüber der Umhüllung zugelassen. Das verringert den "Korkenziehereffekt" signifikant bzw. schließt diesen gänzlich oder nahezu gänzlich aus. Außerdem sorgt die optional und zusätzlich außenseitig auf die Umhüllung aufgebrachte pulverförmige Gleitmittelschicht dafür, dass sich die einzelnen Mehrfachrohrbündel insbesondere beim Abwickeln von der Kabeltrommel und auch beim Aufwickeln gegeneinander bewegen können. Dadurch wird nochmals eine Verbesserung im Hinblick auf den "Korkenziehereffekt" beobachtet und insgesamt die Handhabung beim Auf- und Abwickeln und der Verlegung vereinfacht.

Es kommt also zu einer Gleitwirkung der einzelnen wendelförmig auf der Kabeltrommel aufgewickelten Mehrfachrohrbündel bzw. ihrer Umhüllungen gegeneinander. Diese ausdrücklich zugelassene Gleitwirkung zwischen den einzelnen Umhüllungen der Mehrfachrohrbündel an ihren jeweiligen Außenseiten zueinander kann zusätzlich noch dadurch unterstützt und optimiert werden, dass die Umhüllung innenseitig mit Riefen ausgerüstet ist, die eine weitere und ergänzende Relativbewegung zwischen den im Innern der Umhüllung aufgenommenen Mikrokabelrohren und der Umhüllung zulassen.

Jedenfalls stellt die erfindungsgemäß außenseitig auf die Umhüllung aufgebrachte pulverförmige Gleitmittelschicht aus dem beschriebenen Pulver sicher, dass beim Auf- und Abwickeln der Mehrfachrohrbündel auf einer Kabeltrommel oder generell bei der Bevorratung, dem Transport und der Verarbeitung der Mehrfachrohrbündel der zuvor beschriebene Korkenziehereffekt vermieden wird. Das gilt selbst dann, wenn die fragliche Umhüllung nicht zusätzlich mit innenseitigen Riefen ausgerüstet ist, wie sie im gattungsbildenden Stand der Technik nach der EP 3 958 415 A1 propagiert werden.

Um die Haftung des Pulvers als pulverförmige Gleitmittelschicht außenseitig auf den Kabelrohren und/oder der Umhüllung zu verbessern, kann zusätzlich auch so vorgegangen werden, dass das Pulver vor dem Auftrag elektrostatisch aufgeladen wird. Hierbei geht die Erfindung von der weiteren Erkenntnis aus, dass die Umhüllung ebenso wie die Kabelrohre bzw. Mikrokabelrohre typischerweise aus einem thermoplastischen Kunststoff hergestellt werden. Hier kommen oftmals Kunststoffe wie Polyethylen, Polypropylen oder auch Polyamid, Polyester usw. zum Einsatz. Selbstverständlich sind auch Mischungen ebenso wie Umhüllungen respektive Mikrokabelrohre aus mehreren koextrudierten Schichten möglich.

Jedenfalls zeichnen sich solche thermoplastischen Kunststoffe dadurch aus, dass eine eventuelle elektrische Aufladung des Pulvers vor dem Auftrag außenseitig auf die Kabelrohre und/oder die Umhüllung die Haftung des Pulvers auf der Umhüllung bzw. dem jeweiligen Kabelrohr verbessert. Grundsätzlich kann hier auch mit zusätzlich aufgebrachten Flüssigkeiten gearbeitet werden, welche die Haftung des Pulvers als pulverförmige Gleitmittelschicht außenseitig auf den Kabelrohren und/oder der Umhüllung verbessern und anschließend beispielsweise verdunsten.

In der Regel wird jedoch ohne Flüssigkeit gearbeitet, schon weil das eingesetzte Pulver meistens hydrophob ausgebildet ist. In diesem Fall sorgt der das Pulver mitnehmende Zuluftstrom dafür, dass der Auftrag des Pulvers außenseitig auf dem jeweiligen Kabelrohr und/oder der Umhüllung vergleichbar einem Sprühbelag erfolgt und auf diese Weise die gewünschte pulverförmige Gleitmittelschicht gebildet wird. Hierin sind die wesentlichen Vorteile zu sehen.

Gegenstand der Erfindung ist auch eine Vorrichtung zur Herstellung eines Rohrverbundes aus Mikrokabelrohren, wie sie im unabhängigen Anspruch 9 beschrieben wird. Außerdem die Verwendung des betreffenden Pulvers als pulverförmige Gleitmittelschicht entsprechend dem unabhängigen Anspruch 12. Nachfolgend wird die Erfindung anhand einer lediglich ein Ausführungsbeispiel darstellenden Zeichnung näher erläutert; es zeigen:
Fig. 1 die erfindungsgemäße Vorrichtung zur Herstellung eines Rohrverbundes aus Kabelrohren, welche vorzugsweise zur Durchführung des zuvor beschriebenen Verfahrens geeignet ist und
Fig. 2 einen Querschnitt durch den hergestellten Mehrfachrohrbündel ausgangsseitig der Vorrichtung und vor dem Aufwickeln.

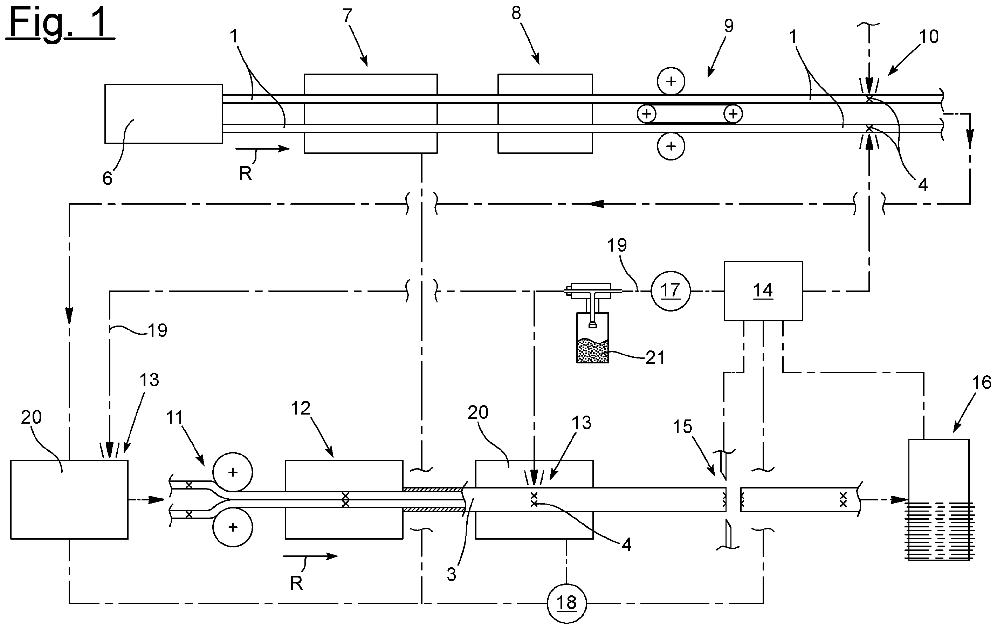

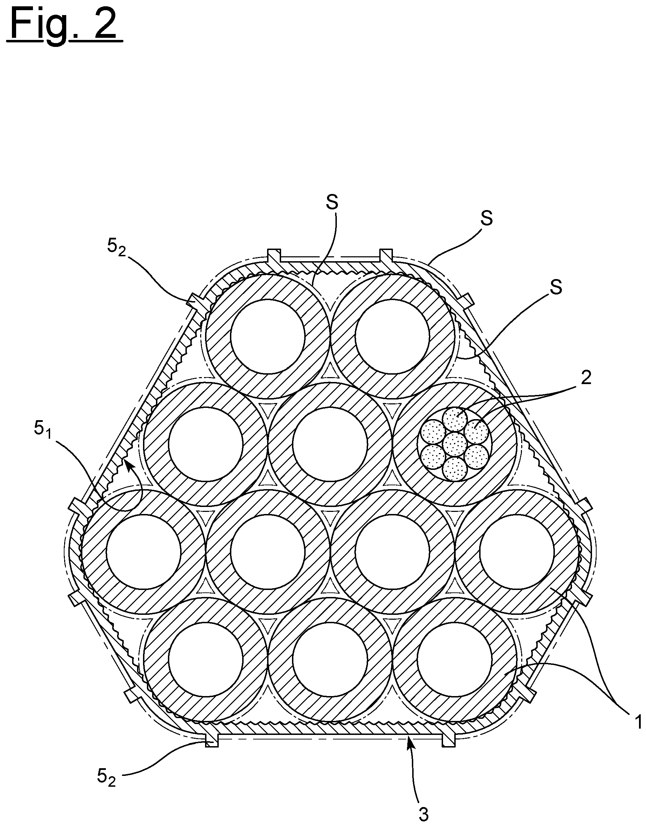

In der Fig. 1 ist eine Vorrichtung zur Herstellung eines Rohrverbundes aus einzelnen Kabelrohren dargestellt. Bei den Kabelrohren handelt es sich im Ausführungsbeispiel um Mikrokabelrohre 1, die zur Aufnahme und Führung von Telekommunikationskabeln 2 eingerichtet sind. Hierzu sei auf die Fig. 2 verwiesen. Bei den Telekommunikationsleitungen 2 handelt es sich im Beispielfall um Glasfaserleitungen. Die einzelnen Kabelrohre bzw. Mikrokabelrohre 1 werden zu diesem Zweck bereitgestellt und mit einer schlauchförmigen Umhüllung 3 zu einem Mehrfachrohrbündel 1, 3 zusammengefasst, wie man anhand des in der Fig. 2 dargestellten Endzustandes nachvollziehen kann.

Das jeweilige Kabelrohr bzw. Mikrokabelrohr 1 kann zur gegenseitigen Unterscheidung über eine Markierung 4 verfügen oder grundsätzlich auch farbig ausgestaltet sein. Sowohl das betreffende Kabelrohr bzw. Mikrokabelrohr 1 als auch die Umhüllung 3 sind jeweils aus einem thermoplastischen Kunststoff wie beispielsweise PE und/oder PP hergestellt. Das gilt selbstverständlich nur beispielhaft.

Die Herstellung des realisierten Mehrfachrohres bzw. Mehrfachrohrbündels 1, 3 wird nachfolgend im Detail beschrieben. Dazu ist entsprechend der Darstellung in der Fig. 2 die erfindungsgemäße und wesentliche Umhüllung 3 an ihrer den Kabelrohren 1 zugewandten Innenseite mit einer Profilierung 5₁ ausgerüstet, die grundsätzlich und für sich genommen auch entbehrlich ist bzw. entfallen kann. Das gilt auch für eine außenseitig der Umhüllung 3 vorgesehene weitere Profilierung 5₂. Bei dieser außenseitigen Profilierung 5₂ handelt es sich nach dem Ausführungsbeispiel um außenseitig in regelmäßigem Abstand auf die Umhüllung 3 aufgebrachte oder als Bestandteil der Umhüllung 3 ausgebildete Riefen respektive Längsriefen. Die Längsriefen verlaufen dabei in Längsrichtung der Mikrokabelrohre 1 und der Umhüllung 3 und sind über den Umfang der Umhüllung 3 gesehen äquidistant voneinander beabstandet.

Dabei ist die Auslegung insgesamt so getroffen, dass sich die Kabelrohre bzw. Mikrokabelrohre 1 ebenso wie die Umhüllung 3 und auch die innenseitige Profilierung 5₁ sowie die außenseitige Profilierung 5₂ bzw. die Riefen oder Längsriefen jeweils streng und einzig in Längsrichtung erstrecken. D.h., etwaige wendelförmige Verläufe werden an dieser Stelle ausdrücklich nicht beobachtet.

Zurückkommend auf die Fig. 1 erkennt man, dass die dort dargestellte Produktionslinie bzw. Vorrichtung zur Herstellung des Mehrfachrohrbündels 1, 3 ausgangsseitig zunächst einmal einen Extruder 6 aufweist. Mithilfe des Extruders 6 werden die Mikrokabelrohre 1 erzeugt und in einer Produktionsrichtung R bewegt. Die Mikrokabelrohre 1 werden dabei ebenso wie die Umhüllung 3 jeweils in ihrer Längsrichtung in der Produktionsrichtung R hergestellt und zusammengefasst sowie mit der schlauchförmigen Umhüllung 3 umschlossen.

An den Extruder 6 schließt sich eine Kalibrierungseinheit 7 an, innerhalb derer mithilfe eines dort herzustellenden Vakuums die einzelnen Mikrokabelrohre 1 hinsichtlich ihres Durchmessers auf den ausgangsseitig benötigten und vorgegebenen Sollwert gebracht werden. Eine anschließende Kühleinheit 8 sorgt dafür, dass die hierdurch im Nachgang zur Kalibrierungseinheit 7 hindurchgeführten Mikrokabelrohre 1 abgekühlt werden.

An die Kühleinheit 8 schließt sich ein Abzug bzw. eine Abzugseinheit 9 an, mit deren Hilfe die einzelnen Mikrokabelrohre 1 jeweils in unterschiedlichen Ebenen zwischen einem umlaufenden Förderband und einer Gegenwalze abgezogen und gefördert werden. Der Abzugseinheit 9 folgt eine Markierungseinheit 10, mit deren Hilfe die einzelnen Mikrokabelrohre 1 mit der gewünschten und längenbezogenen Markierung 4 ausgerüstet werden. An die Markierungseinheit 10 schließt sich erfindungsgemäß eine Pulverausgabevorrichtung 13 an. Eine vergleichbar ausgebildete Pulverausgabevorrichtung 13 ist auch noch in der Produktionsrichtung R im Anschluss an eine Ummantelungseinrichtung bzw. Umhüllungseinheit 12 vorgesehen.

Die erste bzw. eine Pulverausgabevorrichtung 13 findet sich dabei in einem Bereich, in welchem die einzelnen Kabelrohre bzw. Mikrokabelrohre 1 aufgefächert sind und auf diese Weise mit einer jeweiligen pulverförmigen Gleitmittelschicht S ausgerüstet werden können. Das deutet ergänzend die Fig. 2 an. Dabei werden sämtliche Kabelrohre bzw. Mikrokabelrohre 1 durch ihre aufgefächerte Führung jeweils mit der pulverförmigen Gleitmittelschicht S ausgerüstet.

Hieran, d.h. an die erste Pulverausgabevorrichtung 13 anschließend ist eine Konfektionierungseinheit 11 vorgesehen, mit deren Hilfe die einzelnen Mikrokabelrohre 1 eine Zusammenfassung über einen beispielsweise an dieser Stelle vorgesehenen Ring für die anschließende Ummantelung erfahren. Denn die einzelnen Mikrokabelrohre 1 werden davor in der Regel in unterschiedlichen Ebenen nebeneinander geführt.

An die Konfektionierungseinheit 11 schließt sich die zuvor bereits angesprochene Ummantelungseinrichtung bzw. Umhüllungseinheit 12 an, die dafür sorgt, dass die zuvor konfektionierten Mikrokabelrohre 1 mit der schlauchförmigen Umhüllung 3 ausgerüstet werden. Zu diesem Zweck wird die Umhüllung 3 mithilfe eines an dieser Stelle vorgesehenen Ummantelungsextruders auf bzw. um das Bündel an den Mikrokabelrohren 1 herum extrudiert. Bei diesem Vorgang wird die Umhüllung 3 zugleich mit der innenseitigen Profilierung 5₁ und der außenseitigen Profilierung 5₂ ausgerüstet.

An die Ummantelungseinrichtung bzw. Umhüllungseinheit 12 schließt sich erfindungsgemäß eine weitere (zweite) Pulverausgabevorrichtung 13 an. Die Pulverausgabevorrichtung 13 bzw. die beiden Pulverausgabevorrichtungen 13 werden ebenso wie die Markierungseinheit 10 mithilfe einer gemeinsamen Steuereinheit 14 beaufschlagt. Die Steuereinheit 14 beaufschlagt darüber hinaus eine Abkantungseinheit 15 sowie eine Aufnahmeeinheit 16, die nachfolgend noch näher beschrieben wird. Außerdem beaufschlagt die Steuereinheit 14 eine Luftdruckquelle 17 sowie eine Unterdruckeinheit 18, die zugleich auch für den erforderlichen Unterdruck innerhalb der Kalibrierungseinheit 7 sorgt oder sorgen mag.

Die jeweilige Pulverausgabevorrichtung 13 dient zum Auftragen des Pulvers als pulverförmige Gleitmittelschicht S, und zwar nach dem Ausführungsbeispiel außenseitig auf die Kabelrohre bzw. Mikrokabelrohre 1 und ebenso auf die Umhüllung 3. Dazu ist der Pulverausgabevorrichtung 13 die Luftdruckquelle 17 vorgeschaltet bzw. sorgt dafür, dass über eine der Luftdruckquelle 17 folgende Pulverzufuhrleitung 19 das Pulver in eine die Kabelrohre bzw. Mikrokabelrohre 1 und die Umhüllung 3 jeweils umschließende Muffe 20 gefördert wird.

An die Muffe 20 ist die beschriebene Saugeinheit 18 angeschlossen. Außerdem sorgt die Luftdruckquelle 17 insgesamt dafür, dass das in einem Behälter 21 bevorratete Pulver durch die Pulverzufuhrleitung 19 in die Muffe 20 gelangt. Denn mithilfe der Luftdruckquelle 17 wird das im Behälter 21 befindliche Pulver in den fließ- bzw. sprühförmigen Zustand überführt, so dass das Pulver zusammen mit dem Luftstrom durch die Pulverzufuhrleitung 19 gefördert wird und dann in die Muffe 20 eintritt. In der Muffe 20 mag zusätzlich für eine elektrostatische Aufladung des durch die Pulverzufuhrleitung 19 geführten Pulvers gesorgt werden.

Um den sich in der Muffe 20 um die Mikrokabelrohre 1 und die Umhüllung 3 jeweils aufbauenden Überdruck abzubauen, ist die Unterdruckeinheit 18 an die jeweilige Muffe 20 angeschlossen. Das mit dem seitens der Luftdruckquelle 17 erzeugten Luftstrom mitgeführte Pulver legt sich bei diesem Vorgang außenseitig auf die einzelnen Mikrokabelrohre 1 bzw. bildet hier die gewünschte pulverförmige Gleitmittelschicht S, wie dies die Fig. 2 zeigt. Gleiches gilt für die Umhüllung 3 Die an dieser Stelle zusätzlich vorgesehenen Längsriefen bzw. die außenseitige Profilierung 5₂ mag diesen Vorgang bei der Umhüllung 3 derart unterstützen, dass die pulverförmige Gleitmittelschicht S jeweils zwischen den einzelnen Längsriefen ausgebildet wird, wie dies in der Fig. 2 durch eine entsprechend angedeutete Schicht S jeweils verdeutlicht wird. Die Schichtstärke beträgt dabei typischerweise weniger als 1 mm und insbesondere sogar weniger als 100 µm.

Denn als Pulver setzt die Erfindung vorteilhaft ein solches ein, welches wasserabweisend bzw. hydrophob sowie elektrisch isolierend ausgebildet ist.

Tatsächlich hat sich hier ein steriles und hautverträgliches Mineralpulver als besonders günstig erwiesen. Bei dem Pulver handelt es sich im Rahmen des Ausführungsbeispiels um ein Schichtsilikat und insbesondere Magnesiumsilikathydrat. Die Korngröße ist im Bereich von weniger als 100 µm und insbesondere 75 µm und weniger angesiedelt.

Dadurch, dass sämtliche Kabelrohre bzw. Mikrokabelrohre 1 mit der Gleitmittelschicht S ausgerüstet werden, können sich die Kabelrohre innerhalb der Umhüllung 3 gegeneinander bewegen. Auch die auf der Aufnahmeeinheit 16 bzw. Kabeltrommel befindlichen einzelnen Mehrfachrohrbündel 1, 3 können sich gegeneinander bewegen. Hierfür sorgt die Gleitmittelschicht S auf der Umhüllung 3.

## Patentansprüche

1. Verfahren zur Herstellung eines Rohrverbundes aus Kabelrohren, insbesondere Mikrokabelrohren (1) zur Aufnahme und Führung von Telekommunikationsleitungen (2), wonach die einzelnen Kabelrohre bereitgestellt und mit wenigstens einer schlauchförmigen Umhüllung (3) zu einem Mehrfachrohrbündel (1, 3) zusammengefasst werden, und wonach auf die Kabelrohre außenseitig eine pulverförmige Gleitmittelschicht (S) aus einem Pulver aufgebracht wird,
**dadurch gekennzeichnet, dass**
die pulverförmige Gleitmittelschicht (S) mithilfe einer Pulverausgabevorrichtung (13) über zumindest einen Pulverzufuhrkanal (19) auf die Kabelrohre aufgesprüht wird, wobei der Pulverzufuhrkanal (19) in eine die Kabelrohre umschließende Muffe (20) mündet.

2. Verfahren nach Anspruch 1, **dadurch gekennzeichnet, dass** an die Muffe (20) eine Saugeinheit (18) angeschlossen wird.

3. Verfahren nach einem der Ansprüche 1 und 2, **dadurch gekennzeichnet, dass** die pulverförmige Gleitmittelschicht (S) durch einen Zuluftstrom aufgetragen wird.

4. Verfahren nach einem der Ansprüche 1 bis 3, **dadurch gekennzeichnet, dass** auf die Umhüllung (3) ebenfalls außenseitig eine pulverförmige Gleitmittelschicht (S) aus einem Pulver aufgebracht wird und dazu die Umhüllung (3) mit vorzugsweise längserstreckten Riefen als außenseitige Profilierung (5₂) und der zwischen den Riefen (5₂) aufgetragenen pulverförmigen Gleitmittelschicht (S) ausgerüstet wird.

5. Verfahren nach einem der Ansprüche 1 bis 4, **dadurch gekennzeichnet, dass** das Pulver wasserabweisend sowie vorzugsweise elektrisch isolierend ausgebildet ist.

6. Verfahren nach einem der Ansprüche 1 bis 5, **dadurch gekennzeichnet, dass** das Pulver als steriles und hautverträgliches Mineralpulver ausgebildet ist.

7. Verfahren nach Anspruch 6, **dadurch gekennzeichnet, dass** als Pulver ein Schichtsilikat, insbesondere Magnesiumsilikathydrat, eingesetzt wird.

8. Verfahren nach einem der Ansprüche 1 bis 7, **dadurch gekennzeichnet, dass** das Pulver eine Korngröße im Bereich von weniger als 100 µm und insbesondere 75 µm und weniger aufweist.

9. Vorrichtung zur Herstellung eines Rohrverbundes aus Kabelrohren, insbesondere Mikrokabelrohren (1) zur Aufnahme und Führung von Telekommunikationsleitungen (2), vorzugsweise zur Durchführung des Verfahrens nach einem der Ansprüche 1 bis 10, mit zumindest einem Extruder (6) zur Bereitstellung der einzelnen Kabelrohre, und mit einer Umhüllungseinheit (12) zur Zusammenfassung der Kabelrohre und zum Auflegen einer schlauchförmigen Umhüllung (3), und zusätzlich mit einer Pulverausgabevorrichtung (13) zum Auftragen eines Pulvers als pulverförmige Gleitmittelschicht (S) außenseitig auf die Kabelrohre,
**dadurch gekennzeichnet, dass**
die pulverförmige Gleitmittelschicht (S) mithilfe der Pulverausgabevorrichtung (13) über zumindest einen Pulverzufuhrkanal (19) auf die Kabelrohre aufgesprüht werden kann, wobei der Pulverzufuhrkanal (19) in eine die Kabelrohre umschließende Muffe (20) mündet.

10. Vorrichtung nach Anspruch 9, **dadurch gekennzeichnet, dass** die Pulverausgabevorrichtung (13) an eine Luftdruckquelle (17) angeschlossen ist.

11. Vorrichtung nach Anspruch 9 oder 10, **dadurch gekennzeichnet, dass** die Pulverausgabevorrichtung (13) einen in eine die Kabelrohre umschließende Muffe (20) mündenden Pulverzufuhrkanal (19) aufweist.

12. Verwendung eines Pulvers als pulverförmige Gleitmittelschicht (S) zum Aufbringen auf Kabelrohre im Zuge der Herstellung eines Rohrverbundes aus den Kabelrohren und insbesondere Mikrokabelrohren (1) zur Aufnahme und Führung von Telekommunikationsleitungen (2), wonach die einzelnen Kabelrohre bereitgestellt und mit wenigstens einer schlauchförmigen Umhüllung (3) zu einem Mehrfachrohrbündel (1, 3) zusammengefasst werden, und wonach auf die Kabelrohre zuvor, d.h. vor ihrer Zusammenfassung mit der Umhüllung (3), außenseitig das Pulver als pulverförmige Gleitmittelschicht (S) aufgebracht wird, und wonach die pulverförmige Gleitmittelschicht über zumindest einen Pulverzufuhrkanal (19) auf die Kabelrohre aufgesprüht wird, wobei der Pulverzufuhrkanal (19) in eine die Kabelrohre umschließende Muffe (20) mündet.

13. Verwendung nach Anspruch 12, **dadurch gekennzeichnet, dass** als Pulver ein steriles hautverträgliches Mineralpulver zum Einsatz kommt.

## Claims

1. A method for producing a pipe assembly of cable pipes, in particular microcable pipes (1) for receiving and guiding telecommunication lines (2), according to which the individual cable pipes are provided and combined with at least one tubular sheath (3) to form a multi-pipe bundle (1, 3), and according to which a pulverulent lubricant layer (S) consisting of a powder is applied to the outside of the cable pipes,
**characterised in that**
the pulverulent lubricant layer (S) is sprayed onto the cable pipes with the aid of a powder-dispensing device (13) via at least one powder supply duct (19), wherein the powder supply duct (19) opens into a sleeve (20) that surrounds the cable pipes.

2. The method according to Claim 1, **characterised in that** a suction unit (18) is attached to the sleeve (20).

3. The method according to either of Claims 1 and 2, **characterised in that** the pulverulent lubricant layer (S) is applied by a supply air stream.

4. The method according to any one of Claims 1 to 3, **characterised in that** a pulverulent lubricant layer (S) consisting of a powder is also applied to the outside of the sheath (3), and, for this purpose, the sheath (3) is provided with preferably elongate ridges as outer profiling (5₂) and the pulverulent lubricant layer (S) applied between the ridges (5₂).

5. The method according to any one of Claims 1 to 4, **characterised in that** the powder is water-repellent and preferably electrically insulating.

6. The method according to any one of Claims 1 to 5, **characterised in that** the powder is designed as a sterile and skin-compatible mineral powder.

7. The method according to Claim 6, **characterised in that** a phyllosilicate, in particular magnesium silicate hydrate, is used as the powder.

8. The method according to any one of Claims 1 to 7, **characterised in that** the powder has a grain size in the range of less than 100 µm and in particular 75 µm and below.

9. A device for producing a pipe assembly of cable pipes, in particular microcable pipes (1) for receiving and guiding telecommunication lines (2), preferably for carrying out the method according to any one of Claims 1 to 10, having at least one extruder (6) for providing the individual cable pipes, and having a sheathing unit (12) for combining the cable pipes and for applying a tubular sheath (3), and additionally having a powder-dispensing device (13) for applying a powder as a pulverulent lubricant layer (S) to the outside of the cable pipes,
**characterised in that**
the pulverulent lubricant layer (S) can be sprayed onto the cable pipes with the aid of the powder-dispensing device (13) via at least one powder supply duct (19), wherein the powder supply duct (19) opens into a sleeve (20) that surrounds the cable pipes.

10. The device according to Claim 9, **characterised in that** the powder-dispensing device (13) is attached to an air pressure source (17).

11. The device according to Claim 9 or 10, **characterised in that** the powder-dispensing device (13) has a powder supply duct (19) that opens into a sleeve (20) surrounding the cable pipes.

12. Use of a powder as a pulverulent lubricant layer (S) for application to cable pipes during the production of a pipe assembly of the cable pipes and in particular microcable pipes (1) for receiving and guiding telecommunication lines (2), according to which the individual cable pipes are provided and combined with at least one tubular sheath (3) to form a multi-pipe bundle (1, 3), and according to which the powder is applied as the pulverulent lubricant layer (S) to the outside of the cable pipes beforehand, i.e., before they are combined with the sheath (3), and according to which the pulverulent lubricant layer is sprayed onto the cable pipes via at least one powder supply duct (19), wherein the powder supply duct (19) opens into a sleeve (20) surrounding the cable pipes.

13. The use according to Claim 12, **characterised in that** a sterile, skin-compatible mineral powder is used as the powder.

## Revendications

1. Procédé de fabrication d'un ensemble composite de conduits de conduits de câbles, en particulier de conduits de micro-câbles (1) pour loger et guider des conduites de télécommunication (2), selon lequel les conduits de câbles individuels sont préparés et sont assemblés avec au moins une enveloppe (3) en forme de tuyau flexible en un faisceau de conduits multiples (1, 3) et selon lequel une couche de lubrifiant pulvérulente (S) composée d'une poudre est appliquée extérieurement sur les conduits de câbles
**caractérisé en ce que**
la couche de lubrifiant pulvérulente (S) est vaporisée à l'aide d'un dispositif de distribution de poudre (13) par au moins un conduit d'arrivée de poudre (19) sur les conduits de câbles, sachant que le conduit d'arrivée de poudre (19) débouche dans un manchon (20) entourant les conduits de câbles.

2. Procédé selon la revendication 1, **caractérisé en ce qu'**une unité d'aspiration (18) est raccordée au manchon (20).

3. Procédé selon l'une quelconque des revendications 1 et 2, **caractérisé en ce que** la couche de lubrifiant pulvérulente (S) est appliquée par un courant d'arrivée d'air.

4. Procédé selon l'une quelconque des revendications 1 à 3, **caractérisé en ce qu'**une couche de lubrifiant pulvérulente (S) composée d'une poudre est également appliquée extérieurement sur l'enveloppe (3) et l'enveloppe (3) est dotée à cet effet de stries de préférence en extension longitudinale en tant que profilage extérieur (5₂) et de la couche de lubrifiant pulvérulente (S) appliquée entre les stries (5₂).

5. Procédé selon l'une quelconque des revendications 1 à 4, **caractérisé en ce que** la poudre est constituée hydrophobe ainsi que de préférence isolante du point de vue électrique.

6. Procédé selon l'une quelconque des revendications 1 à 5, **caractérisé en ce que** la poudre est constituée sous la forme d'une poudre minérale stérile et offrant une bonne tolérance cutanée.

7. Procédé selon la revendication 6, **caractérisé en ce qu'**un silicate stratifié est utilisé, en particulier un silicate de magnésium hydraté.

8. Procédé selon l'une quelconque des revendications 1 à 7, **caractérisé en ce que** la poudre comporte une granulométrie de l'ordre de moins de 100 µm et en particulier de 75 µm et moins.

9. Dispositif de fabrication d'un ensemble composite de conduits de conduits de câbles, en particulier de conduits de micro-câbles (1) pour loger et guider des conduites de télécommunication (2), de préférence pour exécuter le procédé selon l'une quelconque des revendications 1 à 10, avec au moins une extrudeuse (6) pour préparer les conduits de câbles individuels, et avec une unité de gainage (12) pour assembler les conduits de câbles et pour poser une enveloppe (3) en forme de tuyau flexible et en plus avec un dispositif de distribution de poudre (13) pour appliquer une poudre extérieurement sous la forme d'une couche de lubrifiant pulvérulente (S) sur les conduits de câbles
**caractérisé en ce que**
la couche de lubrifiant pulvérulente (S) peut être vaporisée à l'aide du dispositif de distribution de poudre (13) par au moins un conduit d'arrivée de poudre (19) sur les conduits de câbles,
sachant que le conduit d'arrivée de poudre (19) débouche dans un manchon (20) entourant les conduits de câbles.

10. Dispositif selon la revendication 9, **caractérisé en ce que** le dispositif de distribution de poudre (13) est raccordé à une source d'air comprimé (17).

11. Dispositif selon la revendication 9 ou 10, **caractérisé en ce que** le dispositif de distribution de poudre (13) comporte un conduit d'arrivée de poudre (19) débouchant dans un manchon (20) entourant les conduits de câbles.

12. Utilisation d'une poudre sous la forme d'une couche de lubrifiant pulvérulente (S) pour l'application sur des conduits de câbles au cours de la fabrication d'un ensemble composite de conduits composé de conduits de câbles et en particulier de conduits de micro-câbles (1) pour loger et guider des conduites de télécommunication (2), selon laquelle les conduits de câbles individuels sont préparés et sont assemblés avec au moins une enveloppe (3) en forme de tuyau flexible en un faisceau de conduits multiples (1, 3) et selon laquelle la poudre est appliquée extérieurement sous la forme d'une couche de lubrifiant pulvérulente (S) préalablement sur les conduits de câbles, c'est-à-dire avant leur assemblage avec l'enveloppe (3) et selon laquelle la couche de lubrifiant pulvérulente est vaporisée par au moins un conduit d'arrivée de poudre (19) sur les conduits de câbles, sachant que le conduit d'arrivée de poudre (19) débouche dans un manchon (20) entourant les conduits de câbles.

13. Utilisation selon la revendication 12, **caractérisée en ce qu'**une poudre minérale stérile offrant une bonne tolérance cutanée est utilisée en tant que poudre.
